# EUROPÄISCHE PATENTANMELDUNG

(11) **EP 2 043 123 A2**
(43) Veröffentlichungstag der Anmeldung: **01.04.2009**
(21) Anmeldenummer: 08014123.7
(22) Anmeldetag: 07.08.2008
(51) Int. Cl.: H01H 13/70

(54) **Elektrisches/elektronisches Installationsgerät**

(30) Priorität: 25.09.2007 DE 102007045870
(71) Anmelder: Albrecht Jung GmbH & Co. KG, 58579 Schalksmühle (DE)
(72) Erfinder: Kandt, Richard, 44803 Bochum (DE); Kohlhaas, Johannes, 58579 Schlaksmühle (DE); Ullrich, Konrad, 58339 Breckerfeld (DE); Bonventre, Giancarlo, 58507 Lüdenscheid (DE); Wiesing, Dietmar, 58515 Lüdenscheid (DE); Teichmann, Nicole, 58849 Herscheid (DE); Gebhardt, Marc, 58579 Schalksmühle (DE)

(57) **Zusammenfassung**

Es wird ein elektrisches/elektronisches Installationsgerät insbesondere ein Türkommunikationsgerät vorgeschlagen, welches ein Gehäuse aufweist dessen Sockelteil zur Aufnahme zumindest einer Funktionseinheit und dessen Deckelteil zumindest zur Anordnung und Aufnahme mehrerer Betätigungstasten vorgesehen ist. Zu dem Zweck ein elektrisches/elektronisches Installationsgerät zu schaffen, welches auch bei schwierigen Umgebungsbedingungen durch in der Nähe vorhandene Geräuschquellen eine besonders gute akustische Verständigung zwischen dem Wohnungsinhaber und dem Besucher ermöglicht, ist zumindest eine erste Gehäusekammer zur Aufnahme einer Lautsprechereinheit vorgesehen, wobei zwischen dem Schallaustrittsbereich der Lautsprechereinheit und dem Deckelteil zumindest eine erste Dichtung angeordnet ist.

## Beschreibung

Die vorliegende Erfindung geht von einem gemäß Oberbegriff des Hauptanspruches konzipierten elektrischen/elektronischen Installationsgerät, insbesondere einem Türkommunikationsgerät aus.

Derartige elektrische/elektronische Installationsgerät, insbesondere Türkommunikationsgeräte sind in der Regel dafür vorgesehen, bei Bedarf eine Kommunikationsmöglichkeit zwischen einem Wohnungsinhaber und einem Besucher zu schaffen. Oftmals weist ein solches elektrisches/elektronisches Installationsgerät Betätigungstasten (Klingeltasten) auf, damit sich der Besucher beim Wohnungsinhaber bemerkbar machen kann. Außerdem sind solche Türkommunikationsgeräte oftmals mit einer Lautsprechereinheit und einem Mikrophon versehen, damit der Wohnungsinhaber mit dem Besucher sprechen kann und danach entscheidet, ob diesem Einlass gewährt wird. Zu diesem Zweck sind solche Türkommunikationsgeräte mit einer Öffnungstaste versehen. Vielfach sind solche Türkommunikationsgeräte auch mit einer Funktionstaste ausgerüstet, um z. B. die Beleuchtungsanlage im Flur einschalten zu können.

Durch die DE 198 36 457 C1 ist ein dem Oberbegriff des Hauptanspruches entsprechendes elektrisches/elektronisches Installationsgerät insbesondere ein Türkommunikationsgerät bekannt geworden. Dieses Türkommunikationsgerät weist ein Gehäuse auf, dessen Sockelteil zur Aufnahme mehrerer Funktionseinheiten zumindest mit einer Gehäusekammer versehen ist und dessen Deckelteil zumindest einen Ausschnitt aufweist, welcher zur Anordnung bzw. Aufnahme von Betätigungstasten vorgesehen ist. Bei diesem Türkommunikationsgerät ist die Lautsprechereinheit ohne jegliche akustische Dichtungsmaßnahmen im Gehäuse untergebracht, wodurch sich bei der Kommunikation oftmals eine schlecht verständliche Sprachausgabe ergibt. Dies ist insbesondere der Fall, wenn im Umfeld des Türkommunikationsgerätes andere Geräuschquellen, wie Straßenlärm, Musik, laute Gespräche von Passanten usw. vorhanden sind.

Der vorliegenden Erfindung liegt deshalb die Aufgabe zugrunde, ein elektrisches/elektronisches Installationsgerät, insbesondere ein Türkommunikationsgerät zu schaffen, welches auch bei schwierigen Umgebungsbedingungen durch in der Nähe vorhandene Geräuschquellen eine besonders gute akustische Verständigung zwischen dem Wohnungsinhaber und dem Besucher ermöglicht.

Diese Aufgabe wird durch die im Hauptanspruch angegebenen Merkmale gelöst.

Bei einem solchermaßen ausgebildeten Türkommunikationsgerät ist besonders vorteilhaft, dass die gute Klangqualität der Lautsprechereinheit auf besonders einfache Art und Weise realisiert ist.

Weitere vorteilhafte Ausgestaltungen sind in den Unteransprüchen angegeben. Anhand zweier in den Zeichnungen näher dargestellter Ausführungsbeispiele sei der erfindungsgemäße Gegenstand näher erläutert. Dabei zeigen:
- Fig. 1:: prinziphaft ein erstes Ausführungsbeispiel eines solchen Türkommunikationsgerätes räumlich in Explosionsdarstellung;
- Fig. 2:: prinziphaft den Bereich der Lautsprechereinheit des Türkommunikationsgerätes gemäß Figur 1 im Vollschnitt;
- Fig. 3:: prinziphaft das Türkommunikationsgerät gemäß Figur 1 in Zuordnung zum Abdeckrahmen und zum Tragring;
- Fig. 4:: prinziphaft ein zweites Ausführungsbeispiel eines solchen Türkommunikationsgerätes räumlich in Explosionsdarstellung;
- Fig. 5:: prinziphaft den Bereich der Lautsprechereinheit des Türkommunikationsgerätes gemäß Figur 4 im Vollschnitt;

Wie aus den Zeichnungen hervorgeht, weist ein solches elektrisches/elektronisches Installationsgerät, insbesondere Türkommunikationsgerät ein Gehäuse auf, dessen Sockelteil 1 zur Aufnahme mehrerer Funktionseinheiten mit zumindest einer Gehäusekammer 4, 6 versehen ist und wobei das Gehäuse einen Bereich aufweist, der zur Anordnung und Aufnahme mehrerer Betätigungstasten 3 vorgesehen ist. Eine erste Gehäusekammer 4 ist dabei zur Aufnahme einer Lautsprechereinheit 5 und eine zweite Gehäusekammer 6 zur Aufnahme von weiteren elektrischen/elektronischen Komponenten vorgesehen. Zwischen dem Schallaustrittsbereich der Lautsprechereinheit 5 und einem Deckelteil 2 ist eine erste Dichtung 7 angeordnet, die den Schallaustrittsbereich der Lautsprechereinheit 5 ringförmig umgibt. Zudem ist eine zweite Dichtung 8 vorgesehen, welche zwischen dem Sockelteil 1 und dem Deckelteil 2 abdichtend zu liegen kommt. Außerdem ist dem Sockelteil 1 zumindest eine Domschaltmatte 10 und eine Leiterplatte 11 haltend zugeordnet, damit die zugehörigen Funktionen auf einfache Art und Weise ausgeführt werden können. Im Bereich der Lautsprechereinheit 5 ist außerdem zumindest ein Mikrophon 12 angeordnet, damit sowohl eine gut verständliche Sprachausgabe, als auch eine Sprachaufnahme in hoher Qualität möglich ist.

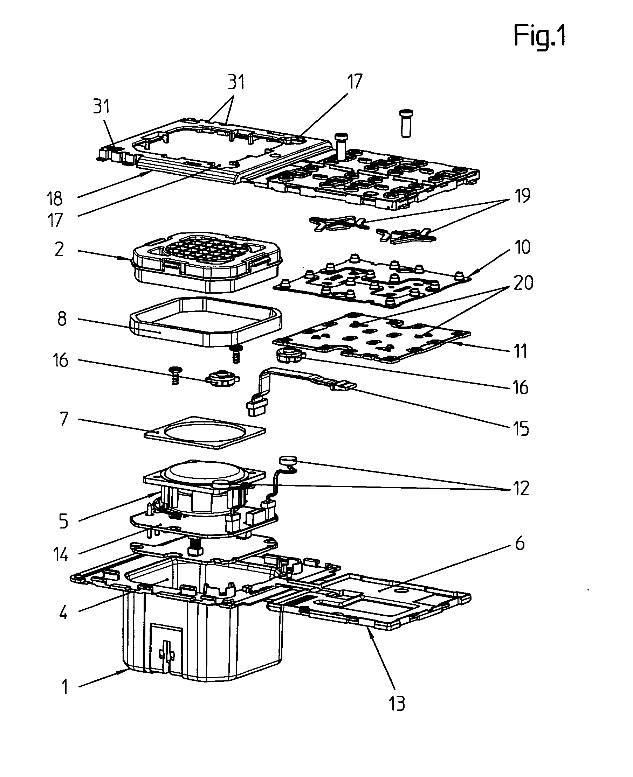

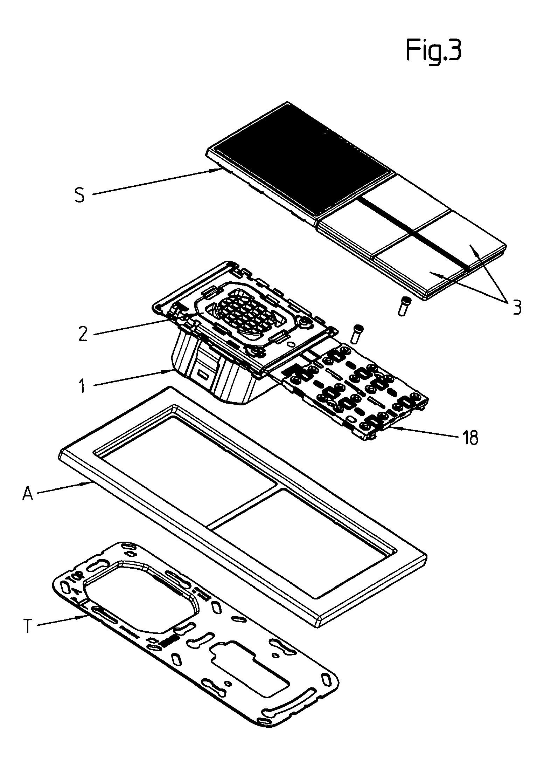

Wie insbesondere aus Figur 1, Figur 2 und Figur 3 hervorgeht, weist das Sockelteil 1 eine erste Gehäusekammer 4 auf und ist einseitig mit einer plattenförmigen Verlängerung 13 versehen, wobei diese die zweite Gehäusekammer 6 aufweist. Die plattenförmige Verlängerung 13 ist einstückig an das Sockelteil 1 angeformt. Die erste Aufnahmekammer 4 ist zur haltenden Aufnahme der mit einer Lautsprecherleiterplatte 14 ausgerüsteten Lautsprechereinheit 5 vorgesehen, wobei zwischen dem Schallaustrittsbereich, der Lautsprechereinheit 5 und dem zugehörigen Deckelteil 2 die erste Dichtung 7 angeordnet ist, die den Schallaustrittsbereich ringförmig umgibt. Außerdem ist eine zweite Dichtung 8 vorgesehen, die das Deckelteil 2 an seiner außenliegenden Kantenfläche ringförmig umgibt und zwischen der Innenwand der ersten Gehäusekammer 4 des Sockelteils 1 und der äußeren Kantenfläche des Deckelteils 2 zu liegen kommt. Die zweite Gehäusekammer 6 ist zur haltenden Aufnahme der Leiterplatte 11 und der darüber liegend angeordneten Domschaltmatte 10 vorgesehen. Eine Verbindungsleitung 15 stellt eine elektrisch leitende Verbindung zwischen der Leiterplatte 11 und der Lautsprecherleiterplatte 14 her. Über auf der Lautsprecherleiterplatte 14 angeordnete Steckverbinder sind außerdem zwei Mikrophone 12 angeschlossen, welchen zur lagegerechten Positionierung jeweils ein Halteteil 16 zugeordnet ist. Zur lagegerechten Positionierung werden die beiden Mikrophone 12 mit den Halteteilen 16 in eine Halteausnehmung 17 eingeklipst, die in eine Halteplatte 18 eingeformt sind. Um einen Schutz vor mechanischen Beschädigungen zu bieten und eine Befestigung der zur Funktion notwendigen Betätigungstasten 3 zu realisieren, ist die Halteplatte 18 am Sockelteil 1 festgelegt. Ein erster Plattenbereich der Halteplatte 18 umgibt dabei das Deckelteil 2 und ein zweiter Plattenbereich überdeckt dabei die Domschaltmatte 10. Zur funktionsgerechten bzw. optisch ansprechenden Beleuchtung der an der Halteplatte 18 gelagerten Betätigungstasten 3 ist eine Lichtleiteranordnung mit mehreren Lichtleitelementen 19 vorgesehen, welche einerseits mit ihren Lichteinkoppelbereichen den auf der Leiterplatte 11 befindlichen Leuchtmitteln 20 und welche andererseits mit ihren Lichtauskoppelbereichen den Betätigungstasten 3 zugeordnet sind. Alle auf der Leiterplatte 11 befindlichen Leuchtmittel 20 sind als LEDs ausgeführt. Um eine positionssichere Befestigung der Lautsprechereinheit 5 am Sockelteil 1 zu gewährleisten, ist diese über eine Schraubverbindung am Sockelteil 1 festgelegt. Auch die Halteplatte 18 ist zur sicheren Positionierung über eine Schraubverbindung am Sockelteil 1 festgelegt. Des weiteren ist ein formschöner Abdeckrahmen A vorgesehen, welcher das elektrische/elektronische Installationsgerät umgibt. Dabei ist das Deckelteil 2 mit seinem Schallaustrittsgitter S und die an der Halteplatte 18 gelagerten Betätigungstasten 3 formschön aufgenommen. Zur Wandbefestigung des elektrischen/elektronischen Installationsgerätes bzw. zu dessen Befestigung an einer Installationsdose ist ein Tragring T vorgesehen.

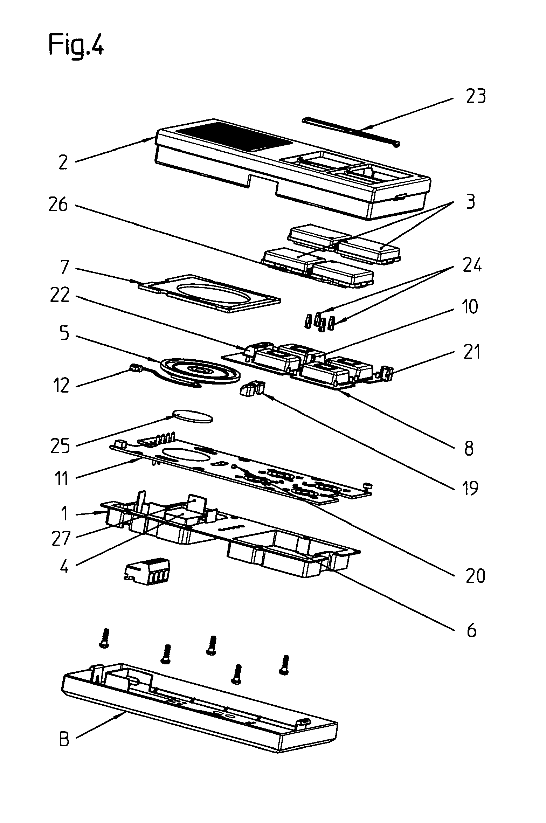

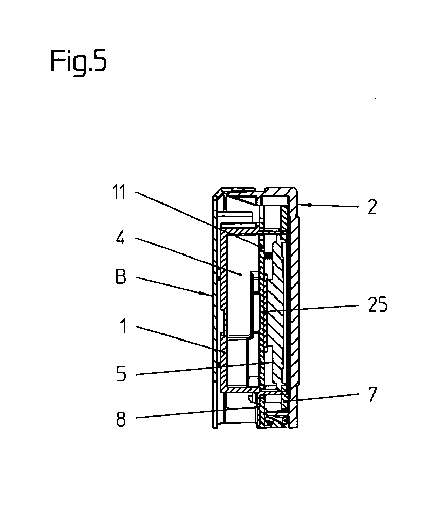

Wie insbesondere aus Figur 4 und Figur 5 hervorgeht, ist zwischen dem Sockelteil 1 und dem Deckelteil 2 eine erste Dichtung 7 angeordnet, die den Schallaustrittsbereich der Lautsprechereinheit 5 ringförmig umgibt. Zudem ist in Zuordnung zu den Betätigungstasten 3 eine zweite Dichtung 8 vorgesehen, an welche ein erster Funktionsbereich angeformt ist, der als Domschaltmatte 10 ausgebildet ist. Außerdem ist die zweite Dichtung 8 bzw. Domschaltmatte 10 einstückig mit einem Aufnahmebereich 21 zur lagegerechten Positionierung eines Mikrophons 12 versehen. Darüber hinaus weist die zweite Dichtung 8 bzw. die Domschaltmatte 10 einstückig einen Abschottungsbereich 22 zur Abschottung eines Lichtleitelementes 19 der Lichtleiteranordnung auf. Zur Verhinderung von Streulicht werden dabei die dem Deckelteil 2 zugewandten Oberflächen dieses Lichtleitelementes 19 der Lichtleiteranordnung taschenartig abgedeckt. Zudem weist die Lichtleiteranordnung einen mit seinem Lichtauskoppelbereich zwischen den Betätigungstasten 3 angeordneten schienenförmige ersten Lichtleiter 23 auf der zur linienförmigen Ausleuchtung vorgesehen und mit seinem Lichteinkoppelbereich dem durch den Abschottungsbereich 22 umgebenen Lichtleitelement 19 zugeordnet ist. Außerdem sind vier stabförmige weitere Lichtleiter 24 vorgesehen, die jeweils mit ihrem Lichteinkoppelbereich einem Leuchtmittel 20 und mit ihrem Lichtauskoppelbereich jeweils einem Lichtaustrittsfenster einer der vier Betätigungstasten 3 zugeordnet sind.

Wie des weiteren insbesondere aus Figur 4 und Figur 5 hervorgeht, weist das Sockelteil 1 eine erste Gehäusekammer 4 und eine zweite Gehäusekammer 6 auf. Die erste Aufnahmekammer 4 ist zur haltenden Aufnahme der Lautsprechereinheit 5 vorgesehen, wobei diese mit der im Sockelteil 1 gehaltenen Leiterplatte 11 in Verbindung steht. Zwischen dem Schallaustrittsbereich, der Lautsprechereinheit 5 und dem zugehörigen Deckelteil 2 ist abdichtend die erste Dichtung 7 angeordnet, wobei diese den Schallaustrittsbereich ringförmig umgibt. Außerdem ist die zweite Dichtung 8 abdichtend so zwischen dem Deckelteil 2 und dem Sockelteil 1 vorgesehen, dass ein Dichtungsbereich einerseits auf der Leiterplatte 11 zur Anlage kommt und andererseits mit einem an das Deckelteil 2 angeformten Steg in Wirkverbindung kommt. Zudem ist ein Dämpfungselement 25 vorgesehen, welches zwischen der Lautsprechereinheit 5 und der Leiterplatte 11 angeordnet ist. Die zweite Gehäusekammer 6 ist zur haltenden Aufnahme der Leiterplatte 11 und der darüber liegend angeordneten zweiten Dichtung 8 bzw. der Domschaltmatte 10 vorgesehen. Um einen Schutz vor mechanischen Beschädigungen zu bieten und eine sichere Lagerung der zur Funktion notwendigen Betätigungstasten 3 zu realisieren, ist am Sockelteil 1 das Deckelteil 2 festgelegt. Ein erster Deckelbereich deckt dabei die Lautsprechereinheit 5 ab und ein zweiter Deckelbereich ist dabei zur Anordnung bzw. Lagerung der Betätigungstasten 3 vorgesehen, welchen die zugehörigen Schaltelemente der Domschaltmatte 10 zugeordnet sind. Zur funktionsgerechten bzw. optisch ansprechenden Beleuchtung der Betätigungstasten 3 ist eine Lichtleiteranordnung wie bereits beschrieben vorgesehen. Alle auf der Leiterplatte 11 befindlichen Leuchtmittel 20 sind als LEDs ausgeführt. Um eine positionssichere Befestigung der Lautsprechereinheit 5 am Sockelteil 1 und des Sockelteils 1 am Deckelteil 2 zu gewährleisten, sind entsprechende Schraubverbindungen vorgesehen. Die Lautsprechereinheit 5 wird dabei durch an das Sockelteil 1 angeformte Rippen 27 in Position gehalten und unter Zwischenschaltung der Dichtung 7 an das Deckelteil 2 gedrückt. Abschließend ist eine das Sockelteil 1 aufnehmende Befestigungsschale B vorgesehen, die das Sockelteil 1 über mehrere Rastanordnungen sicher aufnimmt, so das eine funktionsgerechte Befestigung gewährleistet ist.

Wie des weiteren insbesondere aus Figur 4 hervorgeht, stehen jeweils zwei Betätigungstasten 3 einstückig über angeformte, elastische Stege 26 miteinander in Verbindung. Die Stege 26 stellen sowohl eine Montagehilfe dar, sind aber auch zur Erzeugung einer bestimmten Haptik bei der Betätigung der Betätigungstasten 3 vorgesehen.

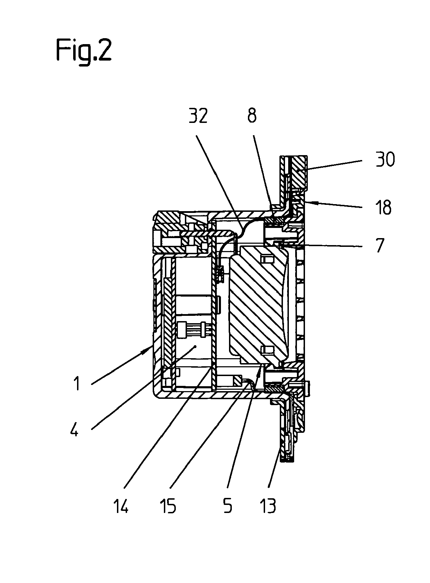

Wie des weiteren insbesondere aus Figur 1 und Figur 2 hervorgeht, besteht die Möglichkeit, über die Halteplatte 18 z. B. ein Display 30 einer Videoeinheit modulartig anzubringen. Zur Anbringung sind dazu Führungsnuten 31 in die Halteplatte 18 eingeformt, welche mit entsprechend ausgebildeten Führungsfedern eines weiteren - der Einfachheit halber nicht dargestellten- Gehäuses in Wirkverbindung kommen. Über eine weitere Verbindungsleitung 32 steht die mit dem Display 30 ausgerüstete Videoeinheit mit der Lautsprecherleitplatte 14 in Verbindung.

## Patentansprüche

1. Elektrisches/elektronisches Installationsgerät, insbesondere Türkommunikationsgerät mit einem Gehäuse, dessen Sockelteil zur Aufnahme mehrerer Funktionseinheiten zumindest mit einer Gehäusekammer versehen ist und wobei das Gehäuse zumindest einen Bereich zur Anordnung mehrerer Betätigungstasten aufweist, **dadurch gekennzeichnet, dass** zumindest eine erste Gehäusekammer (4) zur Aufnahme einer Lautsprechereinheit (5) vorgesehen ist, und dass zwischen dem Schallaustrittsbereich der Lautsprechereinheit (5) und dem Deckelteil (2) zumindest eine erste Dichtung (7) angeordnet ist.

2. Elektrisches/elektronisches Installationsgerät nach Anspruch 1, **dadurch gekennzeichnet, dass** zumindest ein erster Dichtungsbereich einer ersten Dichtung (7) und/oder ein zweiter Dichtungsbereich einer zweiten Dichtung (8) den Schallaustrittsbereich der Lautsprechereinheit (5) ringförmig umgibt.

3. Elektrisches/elektronisches Installationsgerät nach Anspruch 1 oder 2, **dadurch gekennzeichnet, dass** zumindest ein erster Dichtungsbereich einer ersten Dichtung (7) und/oder ein zweiter Dichtungsbereich einer zweiten Dichtung (8) mit dem Sockelteil (1) und/oder einem Deckelteil (2) des Gehäuses stoffschlüssig verbunden ist.

4. Elektrisches/elektronisches Installationsgerät nach einem der Ansprüche 1 bis 3, **dadurch gekennzeichnet, dass** zumindest ein zweiter Dichtungsbereich einer ersten Dichtung (7) und/oder ein zweiter Dichtungsbereich einer zweiten Dichtung (8) abdichtend zwischen dem Sockelteil (1) und dem Deckelteil (2) angeordnet ist.

5. Elektrisches/elektronisches Installationsgerät nach einem der Ansprüche 1 bis 4, **dadurch gekennzeichnet, dass** an eine erste Dichtung (7) und/oder eine zweite Dichtung (8) zumindest ein Funktionsbereich angeformt ist, der als Domschaltmatte (10) ausgeführt ist.

6. Elektrisches/elektronisches Installationsgerät nach einem der Ansprüche 1 bis 5, **dadurch gekennzeichnet, dass** an eine erste Dichtung (7) und/oder eine zweite Dichtung (8) zumindest ein zur Aufnahme eines Mikrophons (12) vorgesehener Aufnahmebereich (21) angeformt ist.

7. Elektrisches/elektronisches Installationsgerät nach einem der Ansprüche 1 bis 6, **dadurch gekennzeichnet, dass** an eine erste Dichtung (7) und/oder eine zweite Dichtung (8) zumindest ein zur Abschottung eines Lichtleitelementes (19) vorgesehener Abschottungsbereich (22) angeformt ist.

8. Elektrisches/elektronisches Installationsgerät nach einem der Ansprüche 1 bis 7, **dadurch gekennzeichnet, dass** zumindest ein Deckelteil (2) aus einem die Übertragung von Schwingungen dämpfenden Material hergestellt ist.

9. Elektrisches/elektronisches Installationsgerät nach einem der Ansprüche 1 bis 8, **dadurch gekennzeichnet, dass** zumindest das Sockelteil (1) aus einem die Übertragung von Schwingungen dämpfenden Material hergestellt ist.

10. Elektrisches/elektronisches Installationsgerät nach einem der Ansprüche 1 bis 9, **dadurch gekennzeichnet, dass** zumindest eine Halteplatte (18) aus einem die Übertragung von Schwingungen dämpfenden Material hergestellt ist.

11. Elektrisches/elektronisches Installationsgerät nach einem der Ansprüche 1 bis 10, **dadurch gekennzeichnet, dass** für das Sockelteil (1) und/oder das Deckelteil (2) und/oder die Halteplatte (18) PE-HD (hochverdichtetes Polyethylen) als Material Verwendung findet.

12. Elektrisches/elektronisches Installationsgerät nach einem der Ansprüche 1 bis 11, **dadurch gekennzeichnet, dass** zumindest zwei Dichtungen (7, 8) einstückig miteinander in Verbindung stehen.

13. Elektrisches/elektronisches Installationsgerät nach einem der Ansprüche 1 bis 12, **dadurch gekennzeichnet, dass** an zumindest eine Dichtung (7,8) zumindest ein weiterer Funktionsbereich angeformt ist.
